(19) Europäisches Patentamt
European Patent Office
Office européen des brevets

(11) Publication number: 0 252 497 A2

(12) # EUROPEAN PATENT APPLICATION

(21) Application number: 87109810.9

(51) Int. Cl.[4]: C01B 17/04

(22) Date of filing: 07.07.87

(30) Priority: 09.07.86 US 883874

(43) Date of publication of application:
13.01.88 Bulletin 88/02

(84) Designated Contracting States:
BE DE ES FR GB IT NL

(71) Applicant: AIR PRODUCTS AND CHEMICALS, INC.
Route no. 222
Trexlertown Pennsylvania 18105(US)

(72) Inventor: Chen, Michael S.K.
RD No.1, Yeakel's Mill Rd Box 140 A
Zionsville, PA 18092(US)
Inventor: Hegarty, W. Patrick
316 Benner Road Apt. 202
Allentown, PA 18104(US)
Inventor: Geist, Jacob M.
2720 Highland Street
Allentown, PA 18105(US)

(74) Representative: Dipl.-Ing. Schwabe, Dr. Dr. Sandmair, Dr. Marx
Stuntzstrasse 16 Postfach 86 02 45
D-8000 München 86(DE)

(54) **Sulfor dioxide injection for claus furnace temperature moderation.**

(57) Sulfur dioxide is injected into the reaction furnace zone or immediately downstream thereof in an oxygen-enriched Claus process to reduce oxygen consumption, increase conversion and capacity while maintaining temperatures at acceptable levels for furnace zone materials.

EP 0 252 497 A2

Xerox Copy Centre

# SULFUR DIOXIDE INJECTION FOR CLAUS FURNACE TEMPERATURE MODERATION

## TECHNICAL FIELD

The present invention is directed to the field of hydrogen sulfide conversion to sulfur in the Claus process using an oxygen combustion reaction furnace and various downstream catalytic converters. More specifically, the present invention is directed to moderation of excessive temperatures in operating a Claus process under high oxygen enrichment levels using externally supplied sulfur dioxide to control reaction conditions.

## BACKGROUND OF THE PRIOR ART

The recovery of elemental sulfur from hydrogen sulfide-containing gas streams is known in the prior art as disclosed in the article "FUNDAMENTALS OF SULFUR RECOVERED BY THE CLAUS PROCESS" by B. Gene Goar, published in the 1977 Gas Conditioning Conference Report.

It is known to moderate an oxygen-enriched Claus combustion process as is taught in U.S. Patent 4,552,747 to B. G. Goar wherein a recycle stream of combustion effluent is used to reduce temperature excesses in a reaction furnace fed with an oxygen-enriched gas. This recycle controls temperature by a sensible heat sink but also increases the gas flow through the furnace section wherein the recycle contains a high percentage of water.

U.S. Patent 3,822,341 to R. S. Smith discloses a process for producing sulfur from a gas containing large amounts of hydrogen sulfide. The process involves reacting oxygen and hydrogen sulfide with cooling so that the effluent therefrom is at a temperature between 550°-650°F. In a portion of the process, the reaction gases in line 100 are mixed with the sulfur dioxide-containing oxygen stream in line 96. Acid gas and oxygen are fed via lines 120 and 124, respectively, into reheat burner 128 and the reaction gases therefrom are passed via line 132 to line 100 where they are mixed with the reaction gases in line 100.

U.S. Patent 4,212,855 to W. Kerner, et al. discloses a process for the production of concentrated sulfuric acid from water and sulfur dioxide-containing gases. A gas stream cooled in the cooling tower 6 and correspondingly partially dried by water condensation is recycled by a moist gas blower 10 through line 11 into a combustion furnace 2. The hydrogen sulfide combustion furnace 2 is fed with a hydrogen sulfide-containing gas feed through line 3 and air fed from blower 1 through line 4.

U.S. Patent 4,419,337 to R. F. Jagodyinski, et al. discloses a catalytic process for reacting a sulfur-containing material such as elemental sulfur or hydrogen sulfide with an oxygen-containing gas to produce sulfur dioxide. The process and apparatus can be used to remove hydrogen sulfide from a gas. The process and apparatus may also be used to produce sulfur dioxide as a product which may be converted to sulfur trioxide and used, for example, to produce sulfuric acid.

Finally, U.S. Patent 3,447,903 to T. K. Wiewiorowski discloses various embodiments of an improved process for the production and recovery of elemental sulfur from the reaction of hydrogen sulfide and sulfur dioxide. Various sulfur dioxide circulations are illustrated.

A review of claus process tail gas clean-up processes by Goar and Sames presented at the March 1983 Gas Conditioning Conference at the University of Oklahoma discusses processes, most notably the Wellman Lord process for oxidizing tail gas sulfur species to $SO_2$ and separating the $SO_2$ for recycle to the reaction furnace for recovery. A paper by Yon, Atwood and Swaim, Hydrocarbon Processing, July 1979, p.197, describes the UCAP process which separates $SO_2$ from a sulfur recovery process tail gas for recycle. Finally, U.S. Patent 4,575,453 to R. Reed discusses use of $SO_2$ as an oxidant and recycle of $SO_2$ from tail gas. It does not discuss the combination of $O_2$ and $SO_2$ as oxidants.

## BRIEF SUMMARY OF THE INVENTION

The present invention is a process for recovering sulfur from the feed gas containing 70 mole% or greater of hydrogen sulfide wherein the gas stream is partially combusted with an oxygen-enriched gas in a Claus reaction furnace zone, a combustion effluent is cooled with the attendant condensation separation of sulfur in a condensation zone and the remaining effluent is further treated, the improvement comprising introducing a temperature moderating stream of externally supplied sulfur dioxide having a concentration of

at least 40 mole% into the reaction furnace zone or immediately downstream of said reaction furnace zone to moderate temperature, reduce oxygen consumption and increase sulfur conversion, wherein the sulfur dioxide is added in the range of 5 to 30 moles of sulfur dioxide based upon 100 moles of the hydrogen sulfide content of said feed gas.

Preferably, the oxygen-enriched gas has an oxygen content of 32-100 mole%.

In various embodiments of the present invention the temperature of the reaction furnace is maintained in the range of 2000° to 2800°F.

Preferably, the present invention produces a combustion effluent from the reaction furnace zone that has a hydrogen sulfide to sulfur dioxide ratio of approximately 2 for subsequent feed to downstream catalytic Claus reaction furnaces.

Optimally, the present invention utilizes sulfur dioxide having a purity of approximately 100 mole%.

Alternatively, the sulfur dioxide may be added as a liquid phase or as a vapor phase temperature moderant to the reaction furnace zone or slightly downstream thereof.

Preferably, the externally supplied sulfur dioxide has a concentration of at least 80 mole%.

The sulfur dioxide moderant can be formed by oxidation of a slip-stream of the hydrogen sulfide-containing feed gas, oxidation of elemental sulfur, or it can be separately introduced from external sources such as any sulfur dioxide-containing gas from a refinery operation.

## BRIEF DESCRIPTION OF THE DRAWINGS

FIG 1 is a graph of sulfur dioxide/hydrogen sulfide versus hydrogen sulfide feed using 100% oxygen as replacement for the air oxidant.

FIG 2 is a schematic flowscheme of a preferred embodiment of the present invention.

## DETAILED DESCRIPTION OF THE INVENTION

Claus sulfur recovery systems are widely utilized to recover sulfur from acid gas streams produced in natural gas purification and in petroleum refineries, primarily from amine sweetening. In refineries, the hydrogen sulfide is in crude oil and is contained in the hydrocarbon desulfurization unit off-gases and fluidized catalytic cracker unit off-gases. Often times, gas streams produced in the amine unit are quite rich in hydrogen sulfide, particularly in petroleum refineries, where it may be in the range of 70-100 mole% hydrogen sulfide. In many refineries, the Claus plant units are either fully loaded or subject to becoming fully loaded (capacity limited) due to the processing of heavier crude oils, which contain increasingly larger amounts of sulfur compounds. With the dwindling known reserves of refinable sweet hydrocarbons and crude oils, less attractive known sour oil reserves are now being processed which typically have higher sulfur content. This trend toward refining of such higher sulfur-containing hydrocarbon feeds will increase in the future and will create capacity limitations on Claus plants presently in existence. Therefore, a method for increasing the capacity of the Claus plant to process sulfur, while maintaining the temperature limitations of the materials of the Claus plant and also reducing oxygen requirements while increasing sulfur conversion, is needed.

As Claus sulfur recovery unit feed rates are increased above capacity, several problems develop. At increased flow, the pressure drop through the Claus plant and tailgas cleanup unit increases and the back pressure increases require hydrogen sulfide and air feed at pressures beyond what is available from the equipment that supplies the hydrogen sulfide fed and the air blower that provides feed air. The increased flow also increases the space velocity in the reaction furnace and the catalytic reactor stages and increases the waste heat boiler duty which can be limited by boiler feed water supply rate or heat transfer surface. This increase in space velocity reduces sulfur conversion and increases emissions to the tailgas cleanup unit. The increased flow to the tailgas cleanup unit increases its pressure drop and further lowers the tailgas sulfur recovery resulting in increased and usually environmentally unacceptable sulfur emissions. The increased back pressures in some Claus plants pose the risk of blowing liquid sulfur drain seals, which would release noxious toxic hydrogen sulfide. Although high pressure sulfur drain seals and increased throughput equipment could be designed to meet the capacity requirements, the reduced sulfur conversion and increased sulfur emissions remain a problem in present day Claus plant operation.

One method which may be used to increase the capacity of an existing Claus plant is the use of oxygen to enrich the airstream to the reaction furnace of the Claus plant from 21 mole% oxygen, which is the content of air, up to 70-90 mole% oxygen or higher, such as 100 mole% oxygen (wherein no air is introduced into the Claus plant). These enrichments of above 21% up to 100% oxygen are referred to as oxygen-enriched gas. Any increase in oxygen content of the airstream effectively reduces the nitrogen content of gases passing through the Claus plant and increases its throughput capacity for sulfur by diminishing the gas flow of inerts, namely nitrogen, which must also be passed through the flow train of the Claus plant. Typically, the capacity of the Claus plant which is handling 70-100 mole% hydrogen sulfide with a typical concentration of hydrocarbons, can be increased 10-15% by enriching the air with oxygen. Any further addition of oxygen will cause the flame temperature limitations of the fire brick and refractory in the reaction furnace to be exceeded.

If the acid gas stream contains 92 mole% hydrogen sulfide and the Claus plant is performing a typical burn of only one-third of the hydrogen sulfide to sulfur dioxide (one-third of the fully stoichiometric air requirements) and the burner is receiving air (21 mole% oxygen), then the theoretical adiabatic flame temperature should be about 2400°F and the reaction furnace outlet temperature is about 2200°F. Note that as described in the 1977 Goar article, the theoretical flame temperature may be higher than the reaction furnace outlet temperature, because as subsequently described, the endothermic Claus reaction proceeds in the reaction furnace and cools the flame products. If the airstream is enriched with oxygen to 40 mole% oxygen, the calculated adiabatic theoretical flame temperature should increase to about 3000°F. Again, if the airstream is enriched with oxygen, this time to 70 mole% oxygen, the calculated theoretical adiabatic flame temperature should increase to about 3350°F. However, most better quality fire brick and refractory material installed in Claus plant reaction furnaces are good for a maximum continuous operating temperature only 2700-2800°F, if they have an alumina content of 85-90 wt% or greater. In practice, it is prudent to maintain temperatures below the extreme limits to avoid refractory failure. Therefore, it may be seen from the above calculations that only limited oxygen enrichment, 30-32 mole% oxygen of the airstream can be used and still hold temperatures below a maximum of 2800°F. With the small reduction of nitrogen input when increasing the airstream oxygen content from 21 up to 32 mole% oxygen, only a modest increase in Claus plant capacity is realized, approximately 12-15%.

The present invention, however, permits increasingly the oxygen enrichment to above 32 mole% to increased capacity of an existing Claus sulfur recovery unit or a new sulfur recovery unit by injecting sulfur dioxide in either a vapor or liquid phase into the reaction furnace zone to moderate the oxygen-enriched flame temperature or alternatively to quench reaction zone effluents. In practice, the injection rate of sulfur dioxide would be set to provide dilution, cooling and equilibrium control to arrive at a reaction furnace temperature in the range of 2000 to 2800°F. In one embodiment, the sulfur dioxide is added independently into the burner of the reaction furnace. With this technique, hydrogen sulfide feed and sulfur recovery capacity can be increased by 115% or 215% of the original capacity by enriching the airstream to 100 mole% oxygen when handling 92.2 mole% hydrogen sulfide acid gas feed. Sulfur conversion is also increased in an amount of at least 2.0%. The sulfur dioxide injection provides a moderating effect because the sulfur dioxide, if in the liquid form, vaporizes thereby absorbing heat and because the introduction of sulfur dioxide reduces the amount of elemental $O_2$ for oxidative conversion of hydrogen sulfide necessary to arrive at the desired 2:1 hydrogen sulfide to sulfur dioxide ratio emanating from the reaction furnace zone. Therefore, the present invention takes advantage of latent heat and sensible heat of the sulfur dioxide, as well as the capability of the sulfur dioxide to shift reversible equilibrium reactions of the Claus process to the right to enhance conversion while reducing the amount of oxygen necessary to arrive at desired end products. Accordingly, the use of a sulfur dioxide moderant enhances the conversion of the endothermic reversible Claus reaction, while diminishing the requirement for the exothermic oxidative conversion of hydrogen sulfide, thereby increasing sulfur conversion, while decreasing oxygen utilization and attendant heat buildup in the reaction furnace. This desired mechanism will be described in greater detail below.

In a typical Claus reaction furnace, the primary reactions are:

(1) $H_2S + 3/2\ O_2 \rightarrow H_2O + SO_2$

This reaction is very exothermic and irreversible. It does to completion in the flame, and all the oxygen is consumed. The exotherm provides the heat to maintain reaction furnace temperatures in the range of 2000 to 2400°F with concentrated hydrogen sulfide feeds when air is used. The sulfur dioxide reacts according to the following formula:

(2) $2H_2S + SO_2 \rightleftharpoons 2H_2O + 3/2\ S_2$.

This reaction is endothermic and moderately slow and reversible. It reaches equilibrium with about 60-70% of the hydrogen sulfide converted to sulfur in the typical reaction furnace with about 0.6 seconds of residence time. With one-third of the total hydrogen sulfide burned to sulfur dioxide in equation (1), the residual unconverted hydrogen sulfide and sulfur dioxide are in the desired 2:1 mole ratio as required for high conversion in the downstream catalytic conversion stages. The sum of reactions (1) and (2) gives the overall Claus process reaction:

(3) $3H_2S + 3/2\ O_2 \rightarrow 3H_2O + 3/2\ S_2$.

Regarding the Claus process, reaction 2, it should be noted that it is an oxidation-reduction reaction: $SO_2$ is the oxidizing agent and it oxidizes the reducing agent $H_2S$ to $H_2O$ and is itself reduced to elemental sulfur. Reaction 2 is endothermic, as noted earlier, and therefore, notably different from the very exothermic oxidation of reaction 1. While both $O_2$ and $SO_2$ are each individually recognized as oxidizing agents in the prior art, as in U.S. Patent 4,575,453 to R. Reed, the unique synergism of using the novel combination of $SO_2$ and $O_2$ or $O_2$-enriched air to use the endothermic oxidation of reaction 2 to alleviate excess temperatures from the extremely exothermic reaction 1, while obtaining the same overall oxidation is unexpected and novel. For example, the following table shows for a 92% $H_2S$ feed, pure $O_2/SO_2$ can be adjusted to moderate the furnace temperatures quite freely.

| (1) | (2) | (3)=(1)+(2) | (4) | (5) |
|---|---|---|---|---|
| $\left(\frac{\text{mole } O_2}{\text{mole } H_2S}\right)$ | $\left(\frac{\text{mole } SO_2}{\text{mole } H_2S}\right)$ | $\left(\frac{\text{mole } (O_2+SO_2)}{\text{mole } H_2S}\right)$ | $\left(\frac{\text{mole S produced}}{\text{mole } (H_2S+SO_2)}\right)$ | T °F |
| 0.356 | 0.154 | 0.510 | 0.658 | 2681 |
| 0.251 | 0.258 | 0.509 | 0.675 | 2002 |

It is well known that the thermodynamic equilibrium is closely approached in the reaction furnace effluent for essentially all species, except for minor quantities of carbonyl sulfide and carbon disulfide. At equilibrium, the following important reversible endothermic reactions also equilibrate:

(4) $H_2S \rightleftharpoons H_2 + 1/2\ S_2$

(5) $CO_2 + H_2S \rightleftharpoons CO + H_2O + 1/2\ S_2$

These endothermic reactions produce sulfur directly, and to the extent that they occur, they reduce the requirement for oxygen in reactions (1) or (3). Because they reduce the exothermic oxygen reaction and are endothermic, they reduce the reaction furnace temperature levels several hundred degrees Fahrenheit when the oxygen input is set to give a 2:1 hydrogen sulfide to sulfur dioxide ratio in the effluent. This cooling effect decreases reaction furnace temperature by several hundred degrees Fahrenheit with rich feeds containing 70% hydrogen sulfide or greater. The cooling is sufficient to keep reaction furnace temperature levels below 2800°F refractory temperature limit even with oxygen-enriched air feed up to 100% oxygen. As oxygen enrichment is increased and the reaction furnace temperature is increased, these endothermic reactions increase and their endotherm tends to moderate and break the temperature rise. However, as the hot effluent gas is cooled in the waste heat boiler, these endothermic reactions reverse to produce hydrogen sulfide such that the hydrogen sulfide to sulfur dioxide ratio increases markedly above the number 2. To restore the ratio of 2:1, more oxygen must be fed to burn excess hydrogen sulfide to result in sulfur dioxide, resulting in excessive furnace temperatures.

According to the present invention, to maintain the proper 2:1 mole ratio of hydrogen sulfide to sulfur dioxide, two techniques of sulfur dioxide injection to the reaction furnace can be practiced to reduce the oxygen feed and hence reduce the exotherm from reaction (1). If sulfur dioxide is injected in the flame zone it has the advantage of reacting sulfur dioxide with hydrogen sulfide feed and immediately moderating temperatures because it promotes the endotherm in the sulfur conversion from reaction (2). On the other end, if sulfur dioxide is injected into the reaction furnace effluent, immediately downstream of the reaction furnace zone, the flame zone temperature is somewhat higher because it does not promote the endothermic Claus reaction, reaction 2, but the flow is smaller in the furnace and the injected sulfur dioxide helps quench and freeze the hot effluent gas and reduce the temperature in the inlet zone of the waste heat boiler. This quench freeze prevents reversible equilibrium reactions returning to initial species, such as hydrogen sulfide and carbon dioxide in one case and hydrogen sulfide in another case as in reactions (2), (4) and (5). Both techniques of injecting sulfur dioxide directly into the flame of the reaction furnace zone and injecting it immediately downstream of the reaction furnace zone to quench reversible reactions which have already gone to their completion lead to similar results as will be illustrated below, but the former technique is more advantageous and preferred.

In a series of four articles published in the Canadian Gas Journal, Gas Processing/Canada, July-August 1970, page 38, September/October 1980, page 32, January/February 1971, page 12 and July/August 1971, page 16 titled, "Computer Design and Simulation of Sulfur Plants", R. S. Lees and J. T. Ryan describe the kinetics of typical Claus processes with emphasis on reaction furnace operation and reverse reactions that occur upon cooling in a waste heat boiler. Lees and Ryan describe the use of primary and secondary cut-off temperatures in computer simulation of a Claus process. The concept of primary and secondary cut-off temperatures which are temperatures assigned to a process for computer simulation, wherein certain desired reactions are frozen, is utilized in the Tables set forth below, wherein Table 1 demonstrates the operation of a Claus reaction furnace at the highest possible oxygen enrichment, i.e. 100% $O_2$, without sulfur dioxide injection and Table 2 demonstrates the effect of the present invention utilizing sulfur dioxide injection into the flame zone of the reaction furnace the same Claus process. Table 1 and Table 2 are computer simulations that demonstrate the effect of sulfur dioxide injection for a 92% hydrogen sulfide Claus plant feed. Table 1 shows the conventional operation with 100% oxygen with the relatively slow reactions (2) and (5) reversing to an equilibrium cut-off freeze temperature of 2000°F (primary cut-off) while cooling in the waste heat boiler. The faster reaction (4) reverses to an equilibrium cut-off freeze temperature of 1600°F (secondary cut-off). With the waste heat boiler effluent hydrogen sulfide/sulfur dioxide ratio controlled to 2:1 for efficient recovery by reaction (2) in the downstream catalytic converters, the oxygen requirement is 0.51 moles/mole of feed hydrogen sulfide. The reaction furnace temperature of 3672°F is unacceptably high. Sulfur recovery is 63%. Examination of the reaction effluent stream shows that the hydrogen sulfide to sulfur dioxide ratio of 0.30 is required there to achieve the 2:1 hydrogen sulfide to sulfur dioxide ratio at the secondary cut-off as required for high conversions downstream.

Table 2 presents the first approach of the present invention encompassing the preferred embodiment whereby sulfur dioxide is added to the reaction furnace in the flame zone as a moderant and reaction species. The furnace temperature is reduced from the Table 1 case of 3672°F to an acceptable level of 2681°F by injecting 14.1 moles of sulfur dioxide (15.4% of feed hydrogen sulfide). Oxygen feed is reduced roughly by 14 moles or 30% of $O_2$ needed if $SO_2$ is not added. The sulfur recovery is 65.8% of the combined hydrogen sulfide and sulfur dioxide feed, which is a small improvement over the base case of Table 1. The total flow rate leaving the waste heat boiler is also essentially the same.

Tables 3 and 4 present similar results for an $H_2S$ feed of 75%. Table 3 shows the furnace temperature reaches 3019°F with 100% $O_2$ without $SO_2$ moderation, which is not acceptable. Table 4 shows the temperature is reduced to an acceptable level of 2672°F with addition of 6.8 moles of pure $SO_2$ (6.7% of feed $H_2S$) per 100 moles of feed.

TABLE 1

Claus Operation Using $O_2$ Without Moderation
($H_2S$ = 92%)

| | Acid Gas Feed | Oxygen | Reaction Furnace Effluent | Primary Cut-Off | Secondary Cut-Off |
|---|---|---|---|---|---|
| Pressure PSIA | 25.00 | 25.00 | 25.00 | 25.00 | 25.00 |
| Temperature °F | 120.00 | 200.00 | 3672.15 | 2000.00 | 1600.00 |
| Enthalpy BTU/HR | -1790895.00 | 40716.29 | -1750062.00 | -5612253.00 | -6346051.00 |
| Vap. Density, lb./cu.ft. | 0.136077 | 0.113012 | 0.017768 | 0.032175 | 0.038859 |
| Ave. Mol. Wt. | 33.856277 | 31.997986 | 31.509430 | 33.967407 | 34.351974 |
| Flow Rates Moles/Hr | | | | | |
| Hydrogen Sulfide | 92.199997 | | 5.979127 | 19.556534 | 22.735107 |
| Steam | 3.600000 | | 58.559509 | 73.291580 | 73.291580 |
| Carbon Dioxide | 3.700000 | | 1.127820 | 4.096430 | 4.096430 |
| Methane | 0.100000 | | | | |
| Ethane | 0.100000 | | | | |
| Propane | 0.200000 | | | | |
| Nitrogen | 0.100000 | | 1.000000 | 1.000000 | 1.000000 |
| Oxygen | | 46.806396 | 0.001215 | 0.001215 | 0.001215 |
| Sulfur Dioxide | | | 20.161575 | 11.311229 | 11.311229 |
| S2 | | | 33.017303 | 30.653290 | 29.033783 |
| S6 | | | | 0.000156 | 0.010101 |
| S7 | | | | | 0.000097 |
| S8 | | | | | 0.000012 |
| Hydrogen | | | 32.561661 | 4.252169 | 1.073594 |
| Carbon Monoxide | | | 3.447747 | 0.479137 | 0.479137 |
| Carbonyl Sulfide | | | 0.024317 | 0.024317 | 0.024317 |
| Composition Mole % | | | | | |
| Hydrogen Sulfide | 92.200027 | | 3.857990 | 13.603031 | 15.993011 |
| Steam | 3.600001 | | 37.785110 | 50.979767 | 51.556061 |
| Carbon Dioxide | 3.700001 | | 0.727718 | 2.849373 | 2.881633 |
| Methane | 0.100000 | | | | |
| Ethane | 0.100000 | | | | |
| Propane | 0.200000 | | | | |
| Nitrogen | 0.100000 | | 0.064525 | 0.069558 | 0.070345 |
| Oxygen | | 100.000000 | 0.000784 | 0.000845 | 0.000855 |
| Sulfur Dioxide | | | 13.009112 | 7.867801 | 7.956880 |
| S2 | | | 21.304184 | 21.321640 | 20.423798 |
| S6 | | | | 0.000108 | 0.007106 |
| S7 | | | | | 0.000068 |
| S8 | | | | | |
| Hydrogen | | | 21.010178 | 2.957701 | 0.755220 |
| Carbon Monoxide | | | 2.224635 | 0.333275 | 0.337049 |
| Carbonyl Sulfide | | | 0.015690 | 0.016914 | 0.017106 |
| TOTAL FLOW MOL/HR | 99.999954 | 46.806396 | 154.980331 | 143.765991 | 142.156509 |
| LB/HR | 3385.625980 | 1497.710210 | 4883.339840 | 4883.355470 | 4883.355470 |
| ACTUAL CFM | 414.671875 | 220.878525 | 4580.667970 | 2529.560550 | 2094.483890 |

TABLE 2

Claus Operation With $O_2$ and $SO_2$ Moderation
($H_2S$ = 92%)

| | Acid Gas Feed | Oxygen | $SO_2$ Feed | Reaction Furnace Effluent | Primary Cut-Off | Secondary Cut-Off |
|---|---|---|---|---|---|---|
| Pressure PSIA | 25.00 | 25.00 | 40.00 | 25.00 | 25.00 | 25.00 |
| Temperature °F | 120.00 | 200.00 | 200.00 | 2681.30 | 2000.00 | 1600.00 |
| Enthalpy BTU/HR | -1790895.00 | 28527.01 | -1789634.00 | -3551717.00 | -5133549.00 | -5894966.00 |
| Vap. Density, lb./cu.ft. | 0.136007 | 0.113012 | 0.361987 | 0.025479 | 0.033604 | 0.040570 |
| Ave. Mol. Wt. | 33.856277 | 31.997986 | 64.057999 | 34.348770 | 35.476120 | 35.864456 |
| Flow Rates Moles/hr. | | | | | | |
| Hydrogen Sulfide | 92.199997 | | | 13.108943 | 20.912903 | 24.108948 |
| Steam | 3.600000 | | | 69.247986 | 71.929077 | 71.929077 |
| Carbon Dioxide | 3.700000 | | | 2.581401 | 4.054925 | 4.054925 |
| Methane | 0.100000 | | | | | |
| Ethane | 0.100000 | | | | | |
| Propane | 0.200000 | | | | | |
| Nitrogen | 0.100000 | | | 0.100001 | 0.100001 | 0.100001 |
| Oxygen | | 32.793839 | | | | |
| Sulfur Dioxide | | | 14.149760 | 14.229096 | 12.151788 | 12.151788 |
| S2 | | | | 39.475250 | 36.611191 | 34.964996 |
| S6 | | | | | 0.000242 | 0.016074 |
| S7 | | | | | | 0.000165 |
| S8 | | | | | | 0.000021 |
| Hydrogen | | | | 14.742956 | 4.257897 | 1.061848 |
| Carbon Monoxide | | | | 1.957445 | 0.483920 | 0.483920 |
| Carbonyl Sulfide | | | | 0.060843 | 0.060843 | 0.060843 |
| Composition Mole % | | | | | | |
| Hydrogen Sulfide | 92.200027 | | | 8.429956 | 13.889825 | 16.187820 |
| Steam | 3.600001 | | | 44.531265 | 47.773483 | 48.296402 |
| Carbon Dioxide | 3.700001 | | | 1.660020 | 2.693179 | 2.722658 |
| Methane | 0.100000 | | | | | |
| Ethane | 0.100000 | | | | | |
| Propane | 0.200000 | | | | | |
| Nitrogen | 0.100000 | | | 0.064307 | 0.066418 | 0.067145 |
| Oxygen | | 100.000000 | | | | |
| Sulfur Dioxide | | | 100.000000 | 9.150296 | 8.070910 | 8.159256 |
| S2 | | | | 25.385315 | 24.316223 | 23.477051 |
| S6 | | | | | 0.000161 | 0.010793 |
| S7 | | | | | | 0.000111 |
| S8 | | | | | | 0.000014 |
| Hydrogen | | | | 9.480744 | 2.827989 | 0.712972 |
| Carbon Monoxide | | | | 1.258773 | 0.321408 | 0.324926 |
| Carbonyl Sulfide | | | | 0.039126 | 0.040410 | 0.040853 |
| TOTAL FLOW MOL/HR | 99.999954 | 32.793839 | 14.149760 | 155.504181 | 150.562729 | 148.932541 |
| LB/HR | 3385.625980 | 1049.336670 | 906.405273 | 5341.375000 | 5341.378910 | 5341.382810 |
| ACTUAL CFM | 414.671875 | 154.753525 | 41.732819 | 3493.961180 | 2649.147710 | 2194.319820 |

TABLE 3

Claus Operation Using $O_2$ Without Moderation
($H_2S$ = 75%)

| | Acid Gas Feed | Oxygen | Reaction Furnace Effluent | Primary Cut-Off | Secondary Cut-Off |
|---|---|---|---|---|---|
| Pressure PSIA | 25.00 | 25.00 | 25.00 | 25.00 | 25.00 |
| Temperature °F | 120.00 | 200.00 | 3018.99 | 2000.00 | 1600.00 |
| Enthalpy BTU/HR | -4571878.00 | 31917.11 | -4539593.00 | -6980302.00 | -7676437.00 |
| Vap. Density, lb./cu.ft. | 0.141911 | 0.113012 | 0.022037 | 0.032943 | 0.039746 |
| Ave. Mol. Wt. | 35.308029 | 31.997879 | 32.902390 | 34.778336 | 35.136475 |
| Flow Rates Moles/Hr | | | | | |
| Hydrogen Sulfide | 74.580002 | | 6.753806 | 15.658911 | 18.393173 |
| Steam | 5.000000 | | 57.241013 | 61.102768 | 61.102768 |
| Carbon Dioxide | 20.220001 | | 9.288388 | 18.466629 | 18.466629 |
| Methane | 0.123000 | | | | |
| Heptane | 0.076000 | | | | |
| Nitrogen | 0.009500 | | 0.009500 | 0.009500 | 0.009500 |
| Oxygen | | 36.690994 | | | |
| Sulfur Dioxide | | | 15.708577 | 9.188578 | 9.188578 |
| S2 | | | 25.973251 | 24.780411 | 23.395477 |
| S6 | | | | 0.000093 | 0.005956 |
| S7 | | | | | |
| S8 | | | | | |
| Hydrogen | | | 16.440186 | 3.673325 | 0.939061 |
| Carbon Monoxide | | | 11.416375 | 2.238131 | 2.238131 |
| Carbonyl Sulfide | | | 0.169394 | 0.169394 | 0.169394 |
| Composition Mole % | | | | | |
| Hydrogen Sulfide | 74.573669 | | 4.722903 | 11.574524 | 13.735604 |
| Steam | 4.999576 | | 40.028351 | 45.165.54 | 45.630173 |
| Carbon Dioxide | 20.218277 | | 6.495320 | 13.649893 | 13.790464 |
| Methane | 0.122990 | | | | |
| Heptane | 0.075993 | | | | |
| Nitrogen | 0.009499 | | 0.006643 | 0.007022 | 0.007094 |
| Oxygen | | 99.999695 | | | |
| Sulfur Dioxide | | | 10.984927 | 6.791878 | 6.861823 |
| S2 | | | 18.162964 | 18.316818 | 17.471207 |
| S6 | | | | | 0.004448 |
| S7 | | | | | |
| S8 | | | | | |
| Hydrogen | | | 11.496537 | 2.715194 | 0.701270 |
| Carbon Monoxide | | | 7.983410 | 1.654348 | 1.671386 |
| Carbonyl Sulfide | | | 0.118457 | 0.125210 | 0.126500 |
| TOTAL FLOW MOL/HR | 100.008469 | 36.691101 | 143.001129 | 135.287704 | 133.908676 |
| LB/HR | 3531.101810 | 1174.037350 | 4705.078120 | 4705.078120 | 4705.078120 |
| ACTUAL CFM | 414.707031 | 173.144150 | 3558.422610 | 2380.384030 | 1972.963380 |

TABLE 4

Claus Operation With $O_2$ and $SO_2$ Moderation
($H_2S$ = 75%)

| | Acid Gas Feed | Oxygen | $SO_2$ Feed | Reaction Furnace Effluent | Primary Cut-Off | Secondary Cut-Off |
|---|---|---|---|---|---|---|
| Pressure PSIA | 25.00 | 25.00 | 40.00 | 25.00 | 25.00 | 25.00 |
| Temperature °F | 120.00 | 200.00 | 200.00 | 2671.97 | 2000.00 | 1600.00 |
| Enthalpy BTU/HR | -4571878.00 | 27506.83 | -632390.00 | -5176332.00 | -6793951.00 | -7499615.00 |
| Vap. Density, lb./cu.ft. | 0.141911 | 0.113012 | 0.361987 | 0.025324 | 0.033477 | 0.040385 |
| Ave. Mol. Wt. | 35.308029 | 31.997818 | 64.057999 | 34.038803 | 35.341171 | 35.701248 |
| Flow Rates Moles/hr. | | | | | | |
| Hydrogen Sulfide | 74.580002 | | | 9.373450 | 16.197952 | 18.944122 |
| Steam | 5.000000 | | | 59.370010 | 60.555435 | 60.555435 |
| Carbon Dioxide | 20.220001 | | | 12.158533 | 18.383560 | 18.383560 |
| Methane | 0.123000 | | | | | |
| Heptane | 0.076000 | | | | | |
| Nitrogen | 0.009500 | | | 0.009500 | 0.009500 | 0.009500 |
| Oxygen | | 31.621048 | | | | |
| Sulfur Dioxide | | | 5.000000 | 13.139181 | 9.433944 | 9.433944 |
| S2 | | | | 28.413849 | 26.853867 | 25.458603 |
| S6 | | | | | | 0.007417 |
| S7 | | | | | | |
| S8 | | | | | | |
| Hydrogen | | | | 11.691242 | 3.681295 | 0.935124 |
| Carbon Monoxide | | | | 8.478155 | 2.253114 | 2.253114 |
| Carbonyl Sulfide | | | | 0.237406 | 0.237406 | 0.237406 |
| Carbon Disulfide | | | | 0.001034 | 0.001034 | 0.001034 |
| Composition Mole % | | | | | | |
| Hydrogen Sulfide | 74.573669 | | | 6.560719 | 11.771154 | 13.907075 |
| Steam | 4.999576 | | | 41.554581 | 44.006012 | 44.454376 |
| Carbon Dioxide | 20.218277 | | | 8.510065 | 13.359445 | 13.495564 |
| Methane | 0.122990 | | | | | |
| Heptane | 0.075993 | | | | | |
| Nitrogen | 0.009499 | | | 0.006649 | 0.006904 | 0.006974 |
| Oxygen | | 99.999512 | | | | |
| Sulfur Dioxide | | | 100.000000 | 9.196448 | 6.855702 | 6.925552 |
| S2 | | | | 19.887573 | 19.514862 | 18.689423 |
| S6 | | | | | 0.000083 | 0.005445 |
| S7 | | | | | | |
| S8 | | | | | | |
| Hydrogen | | | | 8.182996 | 2.675220 | 0.686484 |
| Carbon Monoxide | | | | 5.934078 | 1.637351 | 1.654034 |
| Carbonyl Sulfide | | | | 0.166166 | 0.172524 | 0.174282 |
| Carbon Disulfide | | | | 0.000723 | 0.000751 | 0.000759 |
| TOTAL FLOW MOL/HR | 100.008469 | 31.621201 | 5.000000 | 142.872299 | 137.607162 | 136.219269 |
| LB/HR | 3531.101810 | 1011.809330 | 320.289795 | 4863.199220 | 4863.195310 | 4863.195310 |
| ACTUAL CFM | 414.707031 | 149.219162 | 14.746824 | 3200.602540 | 2421.195310 | 2007.006350 |

Figure 1 shows various amounts of $SO_2$ required for furnace temperature moderation as a function of feed $H_2S$ concentration using 100% oxygen enrichment. The line with 2000°F roughly represents the low end of furnace temperature, while the line with 2671°F roughly represents the high end. As shown in the figure, the amount of required sulfur dioxide (moles per 100 moles $H_2S$) varies from 4 to 19 for 70% $H_2S$ feed and from 20 to 29 for 100% $H_2S$ feed. The sulfur dioxide source could be supplied in any convenient way, and either liquid form or a gaseous form could be employed. For example, the $SO_2$ can be imported or generated by burning a small fraction of hydrogen sulfide feed or liquid sulfur product in a separate process unit using, for example, the technique described in U.S. Patent 4,419,337 to R. F. Jagodyinski, et al. incorporated herein by reference or generated from back end Claus process streams, as is well known in the prior art and which is generally about 3 moles per 100 moles of $H_2S$ feed. However, the purpose and extent here for sulfur dioxide injection is very different from the prior art tailgas cleanup operation, where $SO_2$ may be recovered and recycled and where oxygen use was not involved and reaction furnace temperature moderation was not required or even desirable due to the levels of hydrogen sulfide enrichments in feed gases to those Claus processes.

Furthermore the amount of required $SO_2$ of this invention is far greater than the amount available from tail gas $SO_2$ recovery operation.

The process will now be described with greater detail in a preferred embodiment illustrated in Figure 2. Figure 2 schematically portrays a Claus reaction furnace of traditional construction with 3 condensers, catalytic converters and reheaters in a downstream train ending with a tailgas cleanup unit and stack. Acid gas feed of 70 mole% hydrogen sulfide or better is introduced in line 10 into a burner 20. Air and various blends of oxygen are introduced in line 14 into burner 20. It is possible that air introduced in lower 16 can be blended with pure oxygen in line 12 to result in a mixture with an oxygen enrichment of 32 mole% or better. Alternatively, air and $O_2$ may be introduced unmixed and independently. It is possible that 100% oxygen is utilized to the exclusion of air. Sulfur dioxide is added as a gas or liquid in line 18, but preferably is added as a liquid in order to enhance its temperature moderating effect upon vaporization. Alternatively $SO_2$ may be premixed with air or $O_2$. This mixture is fed to a reaction furnace 22 in which a flame burns the hydrogen sulfide in the presence of oxygen to produce a portion of the sulfur dioxide necessary for downstream catalytic conversion. The externally added sulfur dioxide in line 18 provides temperature moderation, as well as some of the sulfur dioxide necessary to perform the conversion to result in a 2:1 hydrogen sulfide to sulfur dioxide ratio emanating from the reaction furnace 22. Alternatively, the sulfur dioxide can be added downstream of the flame zone in line 19 to provide a quench freeze mode of operation of the Claus process in the reaction furnace zone 22. In this alternative case, oxygen use is diminished because of the quenching of reversing reactions to at least some extent, as well as the presence of sulfur dioxide species added from the external source which diminishes the necessity to add $O_2$ to convert the hydrogen sulfide from the feed to arrive at the 2:1 ratio desired.

The reaction effluents then are cooled further in the waste heat boiler 24 by indirect heat exchange with boiler feed water introduced in line 26 and removed as steam in line 28. The cooled reaction effluent now in line 30 is then introduced into a condenser 32, which again cools by indirect heat exchange with boiler feed water in line 34 leaving as steam in line 36. The initial sulfur content due to the conversion in the reaction furnace is removed in line 38 as elemental sulfur. The residual combustion effluent containing hydrogen sulfide, water, sulfur dioxide and minor amounts of hydrocarbon and carbon dioxide are removed in line 42 and reheated to a temperature in the range of 400°-500°F in heater 48.

The reheated combustion effluent, having hydrogen sulfide and sulfur dioxide in a ratio of approximately 2:1, is introduced in line 50 into a catalytic Claus reactor 52. Additional conversion is achieved and the effluent of the catalytic reaction is removed in line 54 to be cooled for the removal of liquid sulfur in condenser 56. The sulfur is condensed by indirect heat exchange with boiler feed water in line 58, which is removed as steam in line 60. An additional increment of elemental sulfur is removed in the liquid form in line 62.

The combustion effluent then proceeds through two additional stages of reheating, catalytic conversion and liquid sulfur condensation by passage in line 64 through reheater 66 to be introduced in line 68 into catalytic Claus converter 70 to produce sulfur-containing reaction effluent in line 72. This sulfur-containing effluent is further cooled in condenser 74 against boiler feed water in line 76 which produces steam in line 78. An additional increment of sulfur in elemental liquid form is removed in line 80.

This further reaction effluent after removal of condensed sulfur proceeds in line 82 to the reheater 84 which reheats the effluent in the neighborhood of 330-400°F before entry into another converter in line 86 to perform catalytic conversion in that converter or reactor 88. Additional sulfur is formed and the effluent-containing sulfur is removed in line 90 to be cooled in condenser 92 against boiler feed water 94 which produces steam in line 96. The final amount of elemental sulfur in liquid form is removed in line 98. The residual effluent in line 100 is then fed to a tailgas coalescer 102 wherein additional sulfur mist is removed in line 104. The residual stream in line 106 can be sent to a tailgas cleanup unit 109 through line 107 or, alternatively, sent directly to an incinerator 114 by opening of valve 113. If the stream in line 106 is directed into the tailgas cleanup unit 109, it can be further processed for the removal of sulfur and the resulting effluent in line 111 can be recycled to the front end of the system to the acid gas feed in line 10. The cleaned up inert gas stream can then be cycled through line 115 into an incinerator 114 for venting to the atmosphere. The incinerator 114 is operated with a burner 112, supplied with air 108 and a fuel, such as natural gas, in line 110, to combust any residual amounts of sulfur from the tailgas unit or alternatively from the coalescer 102. The resulting stream in line 116 should be environmentally acceptable and can be vented to atmosphere.

In conclusion, the present invention offers a unique and desirable solution to the problem of capacity limited Claus plant operation because as a temperature moderation fluid, sulfur dioxide introduced into a Claus reaction furnace zone reduces the oxygen feed requirements, while maintaining a hydrogen sulfide to sulfur dioxide ratio of 2, exiting from the reaction furnace in the waste heat boiler. Accordingly, a large quantity of heat of combustion, which would necessarily result from the hydrogen sulfide oxidation to sulfur dioxide, is shifted to an external operation which creates sulfur dioxide or if the plant is operated at the source of the sulfur dioxide stream, is dispensed with entirely. Sulfur dioxide injection drives the Claus reaction, reaction (2), to the right for more sulfur conversion, while still maintaining modified temperatures of the overall conversion of hydrogen sulfide to elemental sulfur. Sulfur dioxide, as a temperature moderant introduced into the reaction furnace, also reduces the combined gas flow from the furnace section of the Claus plant, particularly over the gas recycle feature of the Goar patent mentioned in the Background of the Prior Art. The only consideration for the utilization of the present invention for sulfur dioxide injection is the necessity of generation of a concentrated sulfur dioxide stream if one is not present at the plant site. However, the required amount of sulfur dioxide for the practice of the present invention is relatively small, 5-30% of hydrogen sulfide in the feed, depending on the hydrogen sulfide feed composition, such that this problem of external supply does not diminish the substantial benefits that accrue from operation of a Claus process at high oxygen enrichment levels and high hydrogen sulfide feed richnesses to avoid high temperatures and reduce the oxygen demands for an equivalent amount of sulfur conversion and hydrogen sulfide capacity.

The present invention has been set forth with recitation to a preferred embodiment, however, the breadth of the claims should be ascertained not from this preferred embodiment, but rather from the claims which follow.

## Claims

1. In a process for recovering sulfur from a feed gas containing 70 mole% or greater of hydrogen sulfide wherein the gas stream is partially combusted with an oxygen-enriched gas in a Claus reaction furnace zone, a combustion effluent is cooled with the attendant condensation separation of sulfur in a condensation zone and the remaining effluent is further treated, the improvement comprising introducing a temperature moderating stream of externally supplied sulfur dioxide having a concentration of at least 40 mole% into the reaction furnace zone or immediately downstream of said reaction furnace zone to moderate temperature, reduce oxygen consumption and increase sulfur conversion, wherein the sulfur dioxide is added in the range of 5-30 moles of sulfur dioxide based upon 100 moles hydrogen sulfide content of said feed gas.

2. The process of Claim 1 wherein the oxygen-enriched gas has an oxygen content of 32 to 100 mole%.

3. The process of Claim 1 wherein the temperature of the reaction furnace is in the range of 2000°-2800°F.

4. The process of Claim 1 wherein said combustion effluent has a hydrogen sulfide to sulfur dioxide ratio of approximately 2.

5. The process of Claim 1 wherein said sulfur dioxide has a concentration of 80 to 100 mole%.

6. The process of Claim 1 wherein said sulfur dioxide has a concentration of approximately 100 mole%.

7. The process of Claim 1 wherein the sulfur dioxide is introduced as a liquid-phase moderant.

8. The process of Claim 1 wherein the sulfur dioxide is introduced as a vapor-phase moderant.

9. The process of Claim 1 wherein a slipstream of said feed gas is separately reacted with oxygen to produce sulfur dioxide which in turn is introduced into said reaction furnace stage.

10. The process of Claim 1 wherein a slipstream of liquid sulfur product is separately reacted with $O_2$ to produce $SO_2$ which in turn is introduced into said reaction furnace stage.

11. The process of Claim 1 wherein said combustion effluent is further treated in one or more reheaters, catalytic converters and condensers to respectively rewarm the combustion effluent, convert said effluent to sulfur and condense the sulfur from the remaining combustion effluent.

# FIG. 1

$SO_2$ INJECTION REQUIREMENTS

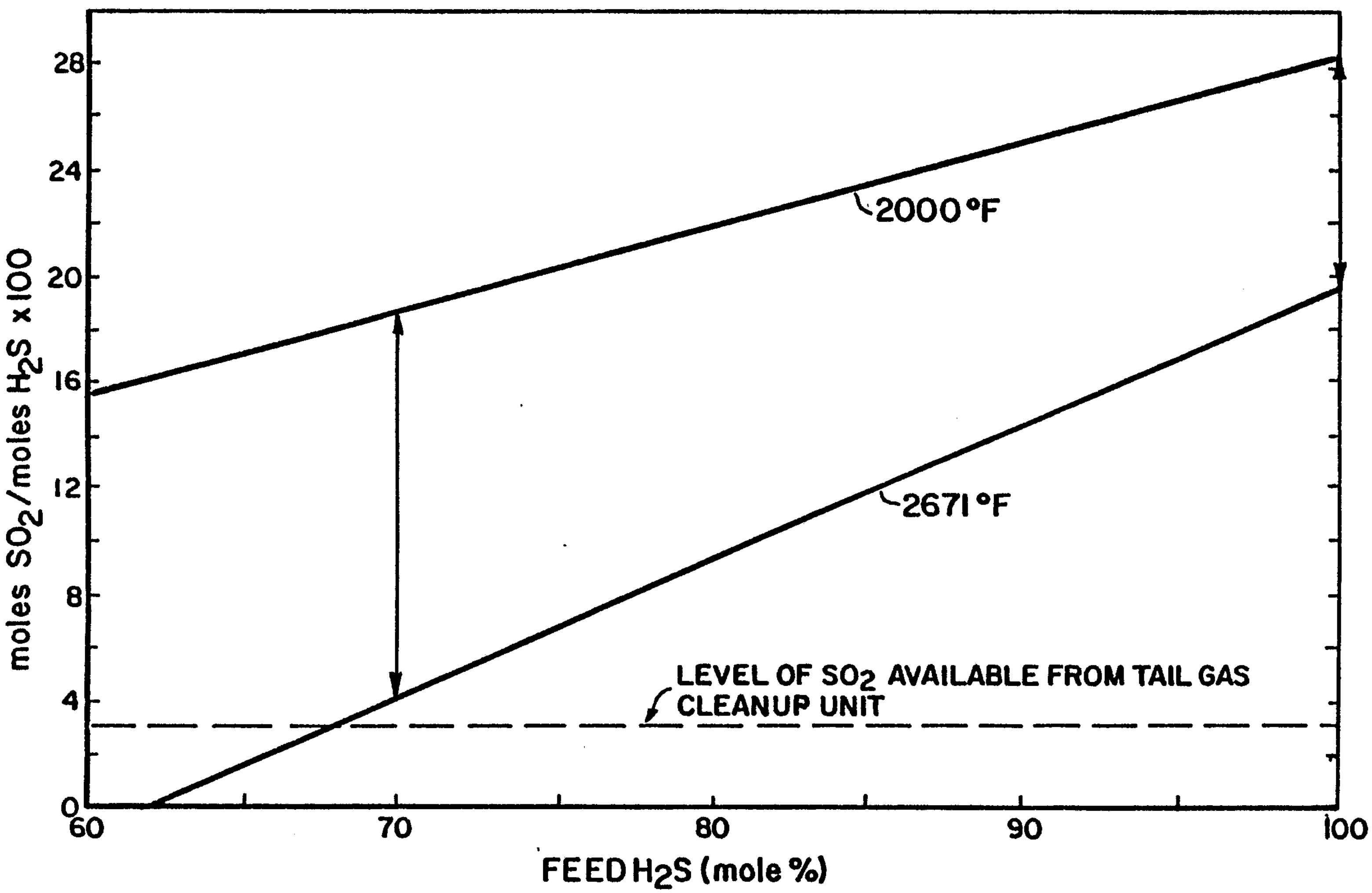

FIG. 2

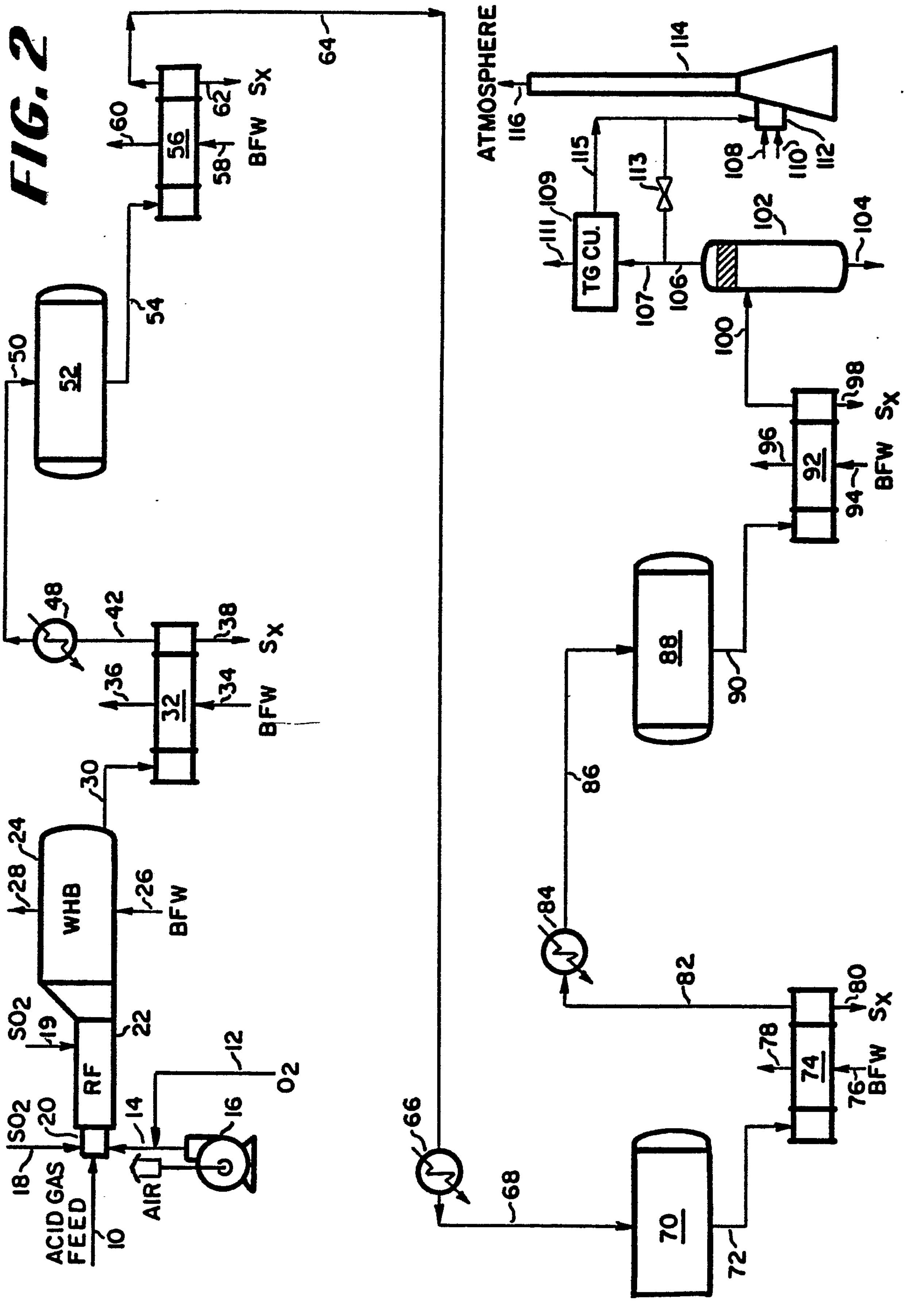

ACID GAS FEED
10
18
SO2
20
SO2
19
RF
22
AIR
14
16
12
O2
WHB
24
28
26
BFW
30
32
36
34
BFW
38
Sx
42
48
50
52
54
56
60
58
BFW
62
Sx
64
66
68
70
72
74
78
76
BFW
80
Sx
82
84
86
88
90
92
96
94
BFW
98
Sx
100
102
104
106
107
TG CU.
111
109
113
115
108
110
112
114
116
ATMOSPHERE